# EUROPEAN PATENT APPLICATION

(11) **EP 1 804 493 A2**
(43) Date of publication of application: **04.07.2007**
(21) Application number: 06126952.8
(22) Date of filing: 21.12.2006
(51) Int. Cl.: H04N 5/44

(54) **A remote control for a display device**

(30) Priority: 28.12.2005 KR 20050131935
(71) Applicant: SAMSUNG ELECTRONICS CO., LTD., Suwon-si Gyeonggi-do 442-742 (KR)
(72) Inventor: Kim, Woo-seop, Yeongtong-gu, Suwon-si, Gyeonggi-do (KR)
(74) Representative: Walaski, Jan Filip

(57) **Abstract**

A remote controller device includes a transmitter; a pair of increasing and decreasing keys to increase and decrease a channel by a predetermined width; a switching key which switches the predetermined width corresponding to the pair of increasing and decreasing keys; and a controller which increases or decreases the channel by the predetermined width if the increasing key or the decreasing key is pressed, and transmits an increasing or decreasing signal to increase or decrease the channel by a wider width than the predetermined width if the increasing key or decreasing key is pressed when the switching key is selected.

## Description

The present invention relates to a remote control for a display device, particularly but not exclusively to a remote control having at least one key capable of performing a plurality of functions and a display apparatus having the remote control.

A conventional remote controller disclosed in Korean Patent application No. 1997-0038531 (hereinafter, referred to as a cited reference). In the cited reference, a single key has a plurality of functions and can perform different functions according to the number of pressings of a switching key. Referring to the drawings of the cited reference, when the switching key is pressed with a predetermined number, it is determined whether the number of pressings is equal to n, which is the number of times for operating a first function key. If the number of pressings is equal to n, the remote controller performs the first function. If the number of pressings is not equal to n, it is determined whether the number of pressings is equal to n+1, which is the number of times for operating a second function key. If the number of pressings is equal to n+1, the remote controller performs the second function. If the number of pressings is not equal to n+1, the remote controller is used without function switching.

However, in the cited reference, since the remote controller cannot simultaneously perform the first and second functions, a user should press the switching key to select the first function or the second function whenever he or she uses the remote controller, which makes instant switching between the first and second functions difficult.

Accordingly, the present invention provides a remote controller including a switching key, which is capable of performing a unique function or different functions of a selected function key according to whether the switching key is selected, and a display system having the remote controller.

The foregoing and/or other aspects of the present invention can be achieved by providing a remote controller device, which comprises a transmitter; a pair of increasing and decreasing keys to increase and decrease a channel by a predetermined width; a switching key which switches the predetermined width corresponding to the pair of increasing and decreasing keys; and a controller which increases or decreases the channel by the predetermined width if the increasing key or the decreasing key is pressed, and transmits an increasing or decreasing signal to increase or decrease the channel by a wider width than the predetermined width if the increasing key or decreasing key is pressed when the switching key is selected.

According to another aspect of the present invention, the remote controller device further comprises a sensing unit to output a sensing signal indicating whether the switching key is selected, and wherein the controller determines whether the switching key is selected, based on a result of the sensing of the sensing unit.

According to another aspect of the present invention, the sensing signal comprises a selecting signal and a releasing signal according to whether the switching key is selected or released.

According to another aspect of the present invention, the remote controller device further comprises a case which forms an outer appearance, and wherein the switching key is placed in a side of the case.

According to another aspect of the present invention, the remote controller device, further comprises a pair of volume increasing and volume decreasing keys to increase and decrease a volume; wherein the controller increases or decreases the volume by a predetermined range if the volume increasing key or the volume decreasing key is pressed, and controls the transmitter to transmit an increasing or decreasing signal to increase or decrease the volume by a wider range than the predetermined range if the volume increasing key or the volume decreasing key is pressed when the switching key is selected.

According to another aspect of the present invention, the pair of increasing and decreasing keys is a pair of channel up/down keys, and the pair of volume increasing and volume decreasing keys is a pair of volume up/down keys.

The foregoing and/or other aspects of the present invention are also achieved by providing a remote controller device, comprising: a transmitter; a pair of increasing and decreasing keys to increase and decrease a channel by a predetermined width; a switching key which switches the predetermined width corresponding to the pair of increasing and decreasing keys; and a controller which increases or decreases the channel by the predetermined width if the increasing key or the decreasing key is pressed , and transmits a preferential channel converting signal which converts a present channel into a preferential channel if the increasing key or decreasing key is pressed when the switching key is selected.

According to another aspect of the present invention, the remote controller device further comprises a sensing unit which outputs a sensing signal indicating whether the switching key is selected, and wherein the controller determines whether the switching key is selected, based on a result of the sensing of the sensing unit.

According to another aspect of the present invention, the sensing signal comprises a selecting signal and a releasing signal according to whether the switching key is selected or released.

According to another aspect of the present invention, the remote controller device further comprises a case which forms an outer appearance, and wherein the switching key is placed in a side of the case.

The foregoing and/or other aspects of the present invention are also achieved by providing a display apparatus comprising: a remote controller device which comprises: a transmitter; a pair of increasing and decreasing keys to increase and decrease a channel by a predetermined width; a switching key which switches the predetermined width corresponding to the pair of increasing and decreasing keys; a controller which increases or decreases the channel by the predetermined width if the increasing key or the decreasing key is pressed, and controls the transmitter to transmit a preferential channel converting signal which converts a present channel into a preferential channel if the increasing key or decreasing key is pressed when the switching key is selected; a receiver unit which receives the transmitted preferential channel converting signal transmitted by the transmitter.

According to another aspect of the present invention, the display apparatus further comprises a pair of volume increasing and volume decreasing keys to increase and decrease a volume; wherein the controller increases or decreases the volume by a predetermined range if the volume increasing key or the volume decreasing key is pressed, and controls the transmitter to transmit an increasing or decreasing signal to increase or decrease the volume by a wider range than the predetermined range if the volume increasing key or the volume decreasing key is pressed when the switching key is selected.

According to another aspect of the present invention, the receiver unit comprises: a memory which stores information regarding the preferential channel.

According to another aspect of the present invention, the receiver unit comprises: a signal processor which converts a broadcast signal of the preferential channel into a digital image signal having a predetermined format.

According to another aspect of the present invention, the pair of increasing and decreasing keys is a pair of channel up/down keys, and the pair of volume increasing and volume decreasing keys is a pair of volume up/down keys.

Embodiments of the invention will now be described, by way of example, with reference to the accompanying drawings, in which:
Figure 1 is a front view of a remote controller according to an embodiment of the present invention;
Figure 2 is a control block diagram of a remote controller and a display system having the remote controller according to an embodiment of the present invention;
Figure 3 is a flowchart illustrating a control operation of the remote controller and the display system illustrated in Figure 2; and
Figure 4 is a flowchart illustrating a control operation of a remote controller and a display system having the remote controller according to another exemplary embodiment of the present invention.

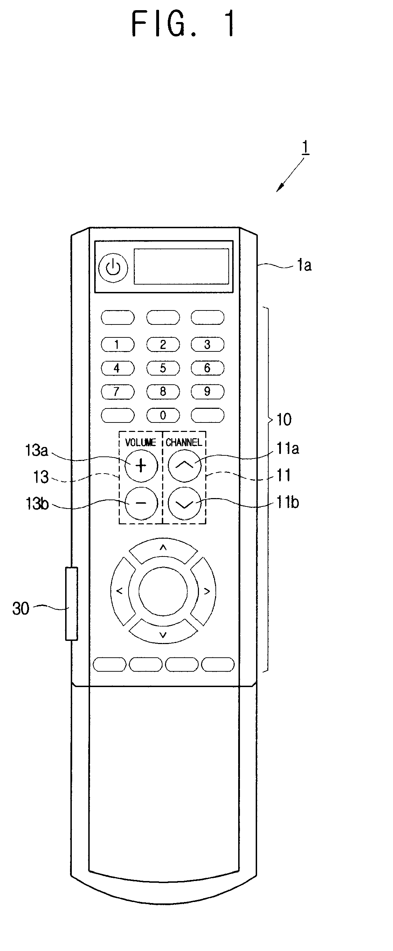

Figure 1 is a front view of a remote controller 1 according to an exemplary embodiment of the present invention. Referring to Figure 1, the remote controller 1 includes a casing 1a in which a plurality of components and a plurality of function keys 10 are contained.

The plurality of function keys 10 are provided as a plurality of input keys to select figures and various functions. The remote controller 1 may be of various types such as a button-type, a touch screen type and the like, instead of the key type. As illustrated in Figure 1, the function keys 10 include a channel change key part 11 including a channel up key 11a and a channel down key 11b, and a volume adjustment key part 13 including a volume up key 13a and a volume down key 13b.

In addition, in this embodiment, the remote controller 1 further includes a switching key 30. As illustrated in Figure 1, the switching key 30 is disposed at one side of the casing 1a at which a user can easily hold the remote controller 1 with his one hand, thus allowing the user to use the switching key 30 more conveniently. Preferably, the switching key 30 is located near the pair of the channel up key 11a and the channel down key 11b or the volume up key 13a and the volume down key 13b.

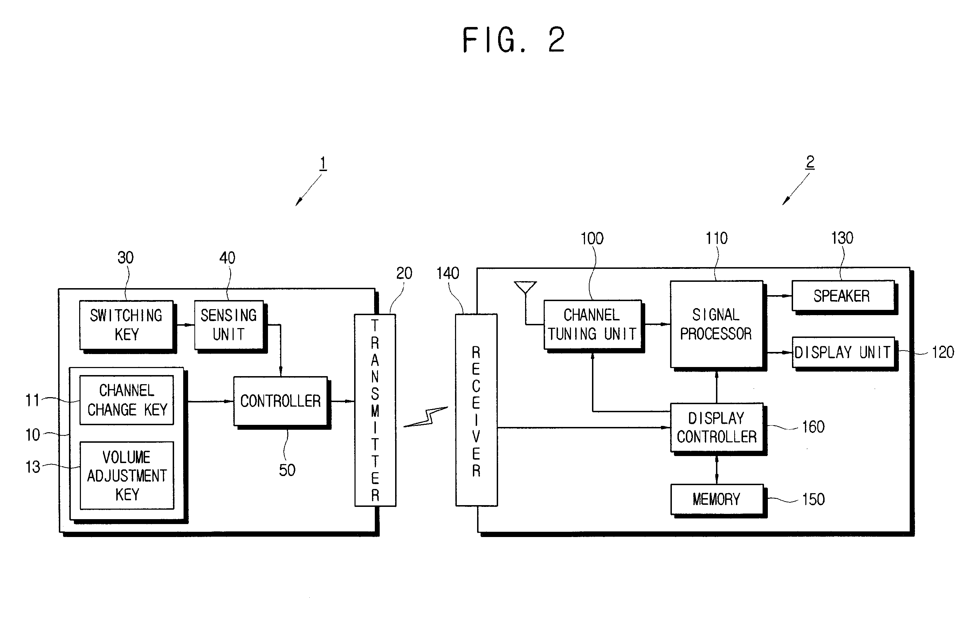

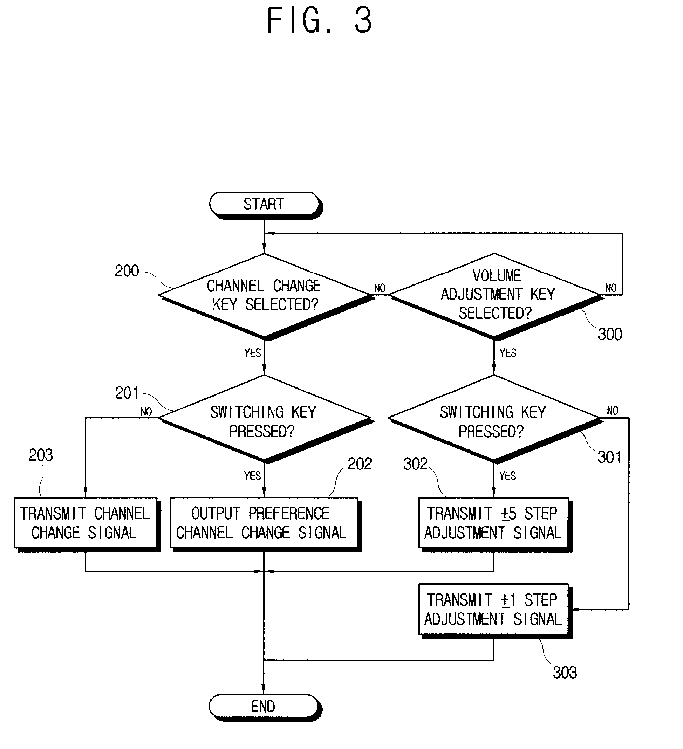

The remote controller 1 according to this exemplary embodiment will be now described in detail with reference to Figures 2 and 3.

Figure 2 is a control block diagram of the remote controller 1 and a display system 2 having the remote controller 1 according to an exemplary embodiment of the present invention.

Referring to Figure 2, the remote controller 1 includes a plurality of function keys 10, a transmitter 20, a switching key 30, and a controller 50.

The transmitter 20 communicates with a display system 2. When a key is selected and pressed, the transmitter 20 outputs a signal having a frequency and code information corresponding to the pressed key. The output signal is generally an infrared ray signal or a supersonic wave signal. The transmitter 20 may comprise a light emitting diode (LED).

Also, if the user selects and presses one of the function keys 10 of the remote controller 1, the controller 50 recognizes the pressed function key and causes a code corresponding to the pressed function key to be transmitted through the transmitter 20 based on pre-stored code information. The controller 50 may comprise a microcomputer (MICOM). Here, the MICOM can include a memory such as an electrically erasable programmable read only memory (EEPROM) in which the code information corresponding to various function keys 10 is stored.

If the user selects and presses one of the function keys 10, the controller 50 causes different code information to be transmitted according to whether the switching key 30 is pressed.

Specifically, when a particular function key 10 is selected and pressed, the controller 50 determines whether the switching key 30 is pressed. If it is determined that the switching key 30 is not pressed, the controller 50 transmits the corresponding code information so that the unique function of the particular function key is performed. If the switching key 30 is pressed, different code information can be transmitted so that a different function is performed instead of the unique function of the particular function key.

For example, if the channel up key 11a of the channel change key part 11 is selected, the controller 50 determines whether the switching key 30 is selected. If the switching key 30 is not pressed, code information corresponding to the unique function of the channel up key 11a is transmitted. If the switching key 30 is pressed, the controller 50 allows change to a channel desired by the user.

In this exemplary embodiment, the remote controller 1 may further include a sensing unit 40 which senses the pressing of the switching key 30 and outputs a sensing signal. The sensing unit 40 may be implemented as one of various type sensors.

Then, the controller 50 can determine whether the switching key 30 is selected, based on the sensing signal output from the sensing unit 40. The operation of the remote controller 1 will be described in detail later.

In this exemplary embodiment, the display system 2 includes a channel tuning unit 100, a signal processor 110, a display unit 120, a speaker 130, a receiver 140, a memory 150, and a display controller 160, as illustrated in Figure 2.

The channel tuning unit 100 may include one or more tuners which tune broadcast signals received through an antenna, a demodulator which demodulates the tuned broadcast signals, a decoder, a multiplexer, etc. The channel tuning unit 100 tunes a broadcast signal having a frequency band corresponding to a tuning control signal of the display controller 160 to be described later. The demodulator outputs a received broadcast signal in a format of a transport stream through vestigial sideband (VSB) demodulation, error correction, etc.

The broadcast signal of the tuned channel is processed by the signal processor 110 and then displayed on the display unit 120. Here, the signal processor 110 may have various functions in correspondence to formats of input image signals.

For example, the signal processor 110 may have an A/D converting function which converts image signals having various formats into digital image signals having a predetermined format, a digital decoding function, a scaling function for adjusting a vertical frequency, a resolution, a picture ratio, etc. of a received digital and/or analogue image signal to be suitable to an output format of the display unit 120, and a predetermined format conversion function.

Here, the display unit 120 may be one of various types of display modules, such as a cathode ray tube (CRT), a digital light processing (DLP), a liquid crystal display (LCD), a plasma display panel (PDP), etc. for displaying video data.

The receiver 140, which receives a remote controller signal transmitted from the remote controller 1, may be implemented as an infrared receiving sensor, a supersonic receiving sensor, etc. in correspondence to the transmitter 20.

Also, the memory 150 may store information regarding preference channels and/or channel lists. The memory 150 may be implemented as an electrically erasable program ROM (EEPROM) or the like. The display controller 160 to be described later performs the corresponding function based on the preference channel information and the channel list information stored in the memory 150.

In this exemplary embodiment, the display controller 160 controls corresponding components to perform corresponding operations according to the code information transmitted from the remote controller 1. The display controller 160 may be implemented as a central processing unit (CPU), a micro controller unit (MCU) or the like.

For example, if the channel change key part 11 or the volume adjustment key part 13 is selected in the remote controller 1, the display controller 160 controls the channel tuning unit 100 and the signal processor 110 to perform respective functions.

Hereinafter, the operations of the remote controller 1 and the display system including the remote controller 1 according to the exemplary embodiment of the present invention will be described in detail with reference to Figure 3.

Figure 3 is a flowchart illustrating a control operation of the remote controller 1 in which a preference channel conversion function is set in the channel change key 11 and a variable width increasing function is set in the volume adjustment key part 13.

As illustrated in Figure 3, it is determined whether a selected function key 10 is the channel change key part 11 at operation 200. If so, the controller 50 determines whether the switching key 30 is pressed at operation 201.

If it is determined that the switching key 30 is pressed, code information corresponding to the channel change key part 11 is converted into a preference channel change signal to be transmitted through the transmitter 20 at operation 202. For example, if the channel up key 11 a is selected, code information corresponding to a preference channel up function is transmitted. If the channel down key 11b is selected, code information corresponding to a preference channel down function is transmitted. The display controller 160 of the display system 2, which receives the preference channel change signal, performs the corresponding preference channel conversion function.

If it is determined that the switching key 30 is not pressed, the controller 50 transmits a channel change signal corresponding to the unique function of the channel change key part 11 at operation 203. Here, if the channel up key 11a is selected, a channel up signal is transmitted. If the channel down key 11b is selected, a channel down signal is transmitted. The display controller 160 receives the channel change signal and applies a tuning signal of a corresponding channel to the channel tuning unit 100 for up/down change to the corresponding channel.

For example, it is assumed that set preference channels are DTV6-1, DTV7-1, DTV11-1 and CATV 27 and general memory channels are DTV6-1, DTV7-1, DTV9-1, DTV11-1, ..., and CATV 102, CATV 104, CATV 105, and CATV 106. If a user presses the channel up key 11a in a state that the switching key 30 is not pressed, CATV 104 is changed to CATV 105. If the user presses the channel up key 11a after pressing the switching key 30, CATV 105 is changed to DTV6-1. If the user presses the channel up key 11a again in the state that the switching key 30 is not pressed, DTV6-1 is changed to CATV 106.

Thus, it is possible to use a preference channel conversion function in addition to existing functions by using the switching key 30 which a user can easily select in the state that he or she grasps the remote controller 1, without selecting a separate preference channel switching key. Also, the original function can be restored when the user takes off his or her hand from the switching key 30. If the selected function key 10 is not the channel change key 11, the controller 50 determines whether the corresponding function key 10 is the volume adjustment key part 13 at operation 300.

If it is determined that the volume control key 13 is selected, it is determined whether the switching key 30 is pressed at operation 301. If it is determined that the switching key 30 is pressed, an existing 1 step variable width signal is converted into a ±5 step adjustment signal for transmission at operation 302.

If it is determined that the switching key 30 is not pressed, an existing ±1 step adjustment signal is transmitted at operation 303.

Thus, when the user decreases or increases a volume by extending the volume variable width, the number of operations of repeatedly pressing the volume up key or the volume down key can be reduced, which allows quick volume adjustment. Also, after the volume variable width increases using the switching key 30, fine volume adjustment is possible without using the switching key 30. This function can be easily selected when the user takes off his or her hand from the switching key 30 and then again puts his or her hand on the switching key 30.

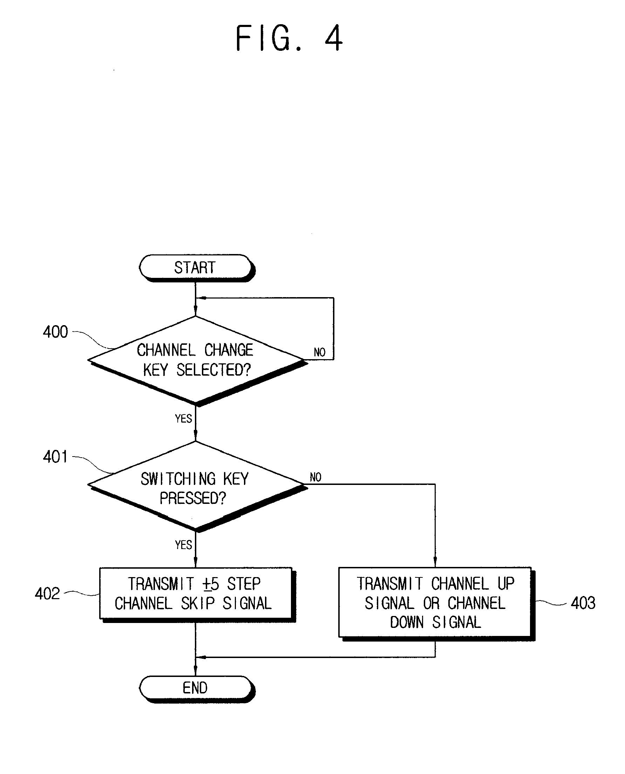

Hereinafter, a remote controller 1 and a display system 2 including the remote controller 1 according to another exemplary embodiment of the present invention will be described with reference to Figures 2 and 4. The same description as in the exemplary embodiment described above will be omitted as necessary.

In this exemplary embodiment, the controller 50 determines whether the switching key 30 is selected when the channel up key 11a of the channel change key part 11 is selected. If the switching key 30 is not pressed, the controller 50 causes code information corresponding to the unique function of the channel up key 11 a to be transmitted. If the switching key 30 is pressed, the controller 50 causes a channel skip signal which skips a predetermined number of channels to be transmitted.

Upon receiving the channel skip signal, the display controller 160 controls the channel tuning unit 110 to skip the predetermined number of channels based on the channel list information stored in the memory 150 to change the channel.

Detailed description on this exemplary embodiment will be described with reference to Figure 4. As illustrated in Figure 4, if the channel change key part 11 is selected at operation 400, the controller 50 determines whether the switching key 30 is pressed at operation 401.

If it is determined that the switching key 30 is pressed, the controller 50 converts code information corresponding to the channel change key 11 into the channel skip signal and causes the channel skip signal to be transmitted through the transmitter 20 at operation 402. The display controller 160 of the display system receives the channel skip signal and controls the channel tuning unit 110 to skip 5 or 10 channels upper or lower than a current channel to a channel following after ±5 or ±10 steps.

If it is determined that the switching key 30 is not pressed, the controller 50 causes a channel change signal corresponding to the unique function of the channel change key part 11 to be transmitted at operation 403.

For example, it is assumed that channels DTV6-1, DTV7-1, DTV9-1, DTV11-1, DTV13-1, DTV14-1, DTV17-1, DTV19-1, ..., CATV 102, CATV 104, CATV105, and CATV 106 are included in a channel list. If a user presses the channel up key 11a in the state that the switching key 30 is not pressed, DTV6-1 is changed to DTV7-1. If the user presses the channel up key 11a in the state that the switching key 30 is pressed, DTV6-1 is changed to DTV14-1.

Although the channel change key part 11 and the volume adjustment key part 13 are illustrated in the above embodiments, the concept of the present invention may be applied to different function keys. Also, although the preference channel function or the channel skip function is set in the channel change key part 11 and the variable width increasing function is set in the volume adjustment key part 13 in the above embodiment, the present invention is not limited to this.

For example, if the channel change key part 11 is pressed in the state that the switching key 30 is pressed, analogue channels may be changed. If the channel change key part 11 is pressed in the state that the switching key 30 is not pressed, digital channels may be changed.

On the other hand, a predetermined width to increase or decrease a channel and a volume may be generally be switched. For example, the predetermined width may be programmed when a display system 2 and a corresponding remote controller are manufactured. Alternatively, the predetermined width may be set up according to a user input.

Also, the remote controller according to the present invention has been described with reference to a remote controller of a display system 2 by way of example, but not limitable thereto. Alternatively, the present invention can be applied to a remote controller of a broadcast receiving apparatus such as a set-top box.

As apparent from the above description, the present invention provides a remote controller which is capable of performing a unique function or different functions of a selected function key according to whether a switching key is selected, and a display system 2 including the remote controller.

Although a few exemplary embodiments of the present invention have been shown and described, it will be appreciated by those skilled in the art that changes may be made in these embodiments without departing from the principles of the invention, the scope of which is defined in the appended claims.

## Claims

1. A remote control for a display device, comprising:
a function key;
a switching key;
a transmitter; and
means for controlling the transmitter to transmit:
a first signal causing the display device to perform a first function in response to the function key being operated by a user whilst the switching key is not operated, and
a second signal causing the display device to perform a second function in response to the function key being operated by a user whilst the switching key is operated.

2. A remote control according to claim 1, wherein:
the function key comprises a pair of increasing and decreasing keys for respectively increasing and decreasing a parameter of the display apparatus by a predetermined value;
the first signal is operable to increase or decrease the parameter by a first predetermined value; and
the second signal is operable to increase or decrease the parameter by a second predetermined value.

3. A remote control according to claim 2, wherein the parameter comprises a viewing channel.

4. A remote control according to claim 2, wherein the parameter comprises a volume setting.

5. A remote control according to claim 2, further comprising a pair of volume increasing and volume decreasing keys to increase and decrease a volume;
wherein the controller controls the transmitter to transmit an increasing or decreasing signal increasing or decreasing the volume by a predetermined range if the volume increasing key or the volume decreasing key is pressed, and controls the transmitter to transmit an increasing or decreasing signal to increase or decrease the volume by a wider range than the predetermined range if the volume increasing key or the volume decreasing key is pressed when the switching key is selected.

6. A remote control according to claim 5, wherein the pair of increasing and decreasing keys is a pair of channel up/down keys, and the pair of volume increasing and volume decreasing keys is a pair of volume up/down keys.

7. A remote control according to claim 1, wherein: the function key comprises a pair of increasing and decreasing keys;
the second signal is operable to increase or decrease the parameter by a second predetermined value the first signal is operable to increase or decrease a viewing channel of the display device by a predetermined value if the increasing key or the decreasing key is pressed; and
the second signal is operable to switch a present viewing channel to a preferential viewing channel if the increasing key or decreasing key is pressed when the switching key is selected.

8. A remote control according to any preceding claim, further comprising a sensing unit which outputs a sensing signal indicating whether the switching key is selected, and wherein the controller determines whether the switching key is selected, based on a result of the sensing of the sensing unit.

9. A remote control according to claim 8, wherein the sensing signal comprises a selecting signal and a releasing signal according to whether the switching key is selected or released.

10. A remote control according to any preceding claim, further comprising a housing, wherein the switching key is disposed in a side of the housing.

11. A display apparatus comprising:
a remote control according to any preceding claim; and
a receiver unit which receives the first and second signals transmitted by the transmitter.

12. A display apparatus according to claim 7 and 11, wherein the receiver unit comprises:
a memory which stores information regarding the preferential channel.

13. A display apparatus according to claim 7 and 11 or 12, wherein the receiver unit comprises:
a signal processor which converts a broadcast signal of the preferential channels into a digital image signal having a predetermined format.
